# FASCICULE DE BREVET EUROPEEN

(11) **EP 3 513 386 B1**
(45) Date de publication et mention de la délivrance du brevet: **23.08.2023**
(21) Numéro de dépôt: 17767838.0
(22) Date de dépôt: 15.09.2017
(51) Int. Cl.: G07F 7/08, G06K 7/08, G06K 13/06

(54) **TERMINAL DE PAIEMENT ÉLECTRONIQUE AVEC ÉLÉMENT MONOBLOC DE LECTURE DE CARTE MAGNÉTIQUE COMPRENANT UNE LAME MÉTALLIQUE DE GLISSEMENT, PROCÉDÉ DE MONTAGE CORRESPONDANT**
ELEKTRONISCHES ZAHLUNGSENDGERÄT MIT EINTEILIGEM MAGNETKARTENLESEELEMENT MIT EINEM METALLSCHIEBER, ZUGEHÖRIGES MONTAGEVERFAHREN
PAYMENT TERMINAL

(30) Priorité: 15.09.2016 FR 1658662
(43) Date de publication de la demande: 24.07.2019
(73) Titulaire: Banks and Acquirers International Holding, 75015 Paris (FR)
(72) Inventeur: FROMENT, Marion, 26270 Loriol (FR)
(74) Mandataire: Vidon Brevets & Stratégie
(86) Numéro de dépôt international: PCT/EP2017/073277
(87) Numéro de publication internationale: WO 2018/050819

(56) Documents cités:
- FR-A1- 2 810 018
- FR-A1- 2 875 620
- US-A- 5 065 001
- US-A- 5 331 139

## Description

### 1. Domaine

L'invention se rapporte au domaine des terminaux de paiement électroniques. Plus particulièrement, l'invention se rapporte au domaine des terminaux de paiement électroniques comprenant un lecteur de carte magnétique.

### 2. Art antérieur

Les terminaux de paiement électroniques sont majoritairement utilisés pour permettre le règlement des achats de biens et de services au sein de points de vente. De tels terminaux comprennent généralement un lecteur de carte à puce et/ou un lecteur de carte magnétique. Ils comprennent également un écran, permettant notamment de visualiser des informations telles que les montants des transactions, et un clavier de saisie de ces mêmes montants par le commerçant ainsi que des codes confidentiels saisis par les clients, ou bien un écran tactile. Un terminal de paiement électronique comprend également des composants électroniques rassemblés dans une ou plusieurs enceintes sécurisées. Tous ces éléments sont inclus dans un boitier, généralement construit à partir d'une demi-coque supérieure et d'une demi-coque inférieure, emboitées l'une sur l'autre, puis solidarisées ensuite au moyen de vis par exemple.

Dans de nombreux pays, la carte magnétique (également connue sous le nom de carte à bande magnétique) reste un moyen de paiement très répandu, et les terminaux de paiement électroniques sont donc souvent équipés d'un lecteur de carte magnétique, utilisé pour lire les informations présentes sur la bande magnétique de la carte magnétique d'un client, et permettre ainsi de procéder au paiement. Un tel lecteur de carte magnétique comprend généralement un corps en matière plastique (intégré à l'une des demi-coques inférieure ou supérieure, par exemple), qui présente une rainure destinée au déplacement de la carte magnétique, ainsi qu'une tête de lecture montée au sein de ce corps. Les documents FR 2 875 620 A1, FR 2 810 018 A1, US 5 065 001 A et US 5 331 139 A décrivent par exemple des terminaux équipés d'un lecteur de carte magnétique de ce type. Pour diverses raisons (parmi lesquelles des raisons de coûts, de poids, etc.), le corps du lecteur de carte magnétique est généralement réalisé en matière plastique, et il est obtenu par des procédés de moulage. Ces procédés de moulage sont notamment intéressants en ce qu'ils permettent de produire des corps de lecteur de carte magnétique qui présentent un caractère monobloc : le corps du lecteur de carte est alors formé d'une seule pièce plastique. On réduit ainsi les coûts en limitant le nombre de moules nécessaire à la production des corps de lecteur de carte, et on s'affranchit de certaines problématiques d'assemblage.

Pour effectuer un paiement avec sa carte magnétique, l'utilisateur la fait glisser dans la rainure du corps du lecteur de carte magnétique. Cette rainure de déplacement de la carte magnétique fait donc office de guide de sorte que, lors du passage de la carte magnétique dans le lecteur, la bande magnétique qu'elle comporte se trouve constamment en regard de la tête de lecture. À cette fin, le fond de la rainure du corps du lecteur de carte magnétique sert de surface d'appui à la tranche de la carte magnétique, lors du glissement.

Lorsque le fond de la rainure du corps du lecteur de carte magnétique est en matière plastique, les frottements répétés engendrés par le glissement des cartes magnétiques entrainent une usure progressive du fond de la rainure. À terme, cette usure est telle que la bande magnétique d'une carte magnétique passée dans le lecteur n'est plus correctement alignée avec la tête de lecture du lecteur. Il en résulte des défauts de lecture des informations portées par la bande magnétique, et le terminal de paiement électronique doit être réparé ou remplacé.

Une solution à ce problème consiste à utiliser une lame métallique comme surface d'appui pour le glissement de la carte magnétique. Une telle lame métallique résiste en effet mieux que du plastique à l'usure provoquée par les passages répétés de cartes magnétiques. Le lecteur de carte magnétique équipé d'une lame métallique peut ainsi voir sa durée de vie allongée à plus de 500 000 passages de cartes, contre moins de 200 000 lorsque le fond de la rainure de déplacement de la carte est en plastique (même chargé). Lorsque cette solution consistant à employer une lame métallique est retenue, le corps en plastique du lecteur de carte magnétique n'est pas formé d'une seule pièce : il comprend ainsi généralement au moins deux parties plastiques de formes sensiblement rectangulaires et de dimensions sensiblement équivalentes, destinées à être assemblées en vis-à-vis l'une de l'autre, de sorte à former les parois de la rainure de déplacement de la carte magnétique. La lame métallique formant le fond de la rainure est alors installée entre ces deux parties plastiques, lors de l'assemblage du lecteur (en d'autres termes, la lame métallique est prise en « sandwich » entre ces deux parties plastiques). Cette conception en au moins deux parties du corps du lecteur de carte magnétique présente néanmoins un certain nombre d'inconvénients (notamment par rapport à une conception monobloc dans laquelle le corps du lecteur de carte est formé d'une seule pièce plastique). Outre les problèmes d'assemblage inhérents à une conception en plusieurs parties, une telle conception nécessite l'emploi de moules supplémentaires, d'où des coûts de production plus élevés du lecteur de carte magnétique. Une conception en plusieurs parties ne permet par ailleurs pas d'atteindre le même degré de compacité qu'une conception de type monobloc : elle s'adapte donc mal aux exigences des utilisateurs actuels, qui réclament des dispositifs toujours plus compacts. Enfin, le fait que le corps du lecteur de carte magnétique résulte d'un assemblage de pièces plastique le rend plus vulnérable aux fraudes : il existe toujours un risque qu'une personne malveillante parvienne à le démonter pour y introduire un dispositif frauduleux lui permettant de récupérer les informations des cartes magnétiques des clients (à l'inverse, un corps de lecteur de carte magnétique de type monobloc ne peut être démonté, il devra donc être cassé par la personne malveillante, ce qui rend la fraude beaucoup plus facilement détectable).

Le surmoulage d'un corps de lecteur de carte magnétique monobloc en plastique directement sur la lame métallique pourrait être envisagé, mais une telle technique requiert une grande précision de mise en oeuvre, et elle s'avère donc très coûteuse.

Aucune des solutions actuelles n'est donc idéale, et il existe un besoin pour des terminaux de paiement électroniques équipés de lecteurs de carte magnétique qui répondent simultanément à plusieurs exigences du marché et des utilisateurs, à savoir des terminaux de paiement plus compacts, moins coûteux à produire, mais offrant néanmoins des garanties accrues en terme de sécurisation face à la fraude, et des garanties en terme de durée de vie.

### 2. Résumé

L'invention ne présente pas au moins certains de ces problèmes de l'art antérieur. En effet, il est proposé un terminal de paiement électronique selon la revendication 1.

De cette manière, l'élément monobloc de lecture de carte magnétique du terminal de paiement électronique offre une résistance accrue à l'usure provoquée par le glissement répété de cartes magnétiques dans la rainure de déplacement, grâce au montage d'une lame de glissement en métal au fond de la rainure de déplacement d'une carte magnétique. De cette manière, le caractère monobloc du corps du lecteur de carte magnétique est également préservé : le terminal de paiement électronique présente non seulement une durée de vie accrue (en terme de nombre de glissement de cartes qu'il est possible d'effectuer avant que l'usure du lecteur de carte n'engendre des problèmes de lecture de cartes), mais cet avantage est de plus obtenu sans préjudice des autres avantages liés à l'utilisation d'un élément monobloc en tant que corps du lecteur de carte magnétique. Ainsi, le terminal de paiement électronique selon la technique proposée répond également aux exigences des utilisateurs en termes de réduction des coûts de production, de compacité du boitier, et de sécurisation des transactions.

De cette manière, la lame est conformée et dimensionnée de sorte de présenter des moyens de maintien au fond de la rainure, matérialisés par les portions de fixation. Ceci évite d'avoir recours au surmoulage de l'élément monobloc sur la lame métallique de glissement pour maintenir cette dernière : ainsi, l'élément monobloc reste simple à produire, et on s'affranchit d'une opération (le surmoulage) qui requiert une très grande précision et qui est en général coûteuse.

De cette manière, la lame métallique de glissement peut être maintenue au fond de la rainure par simple emboitement des portions de fixation de la lame dans des logements de blocage complémentaires aménagés dans l'ensemble monobloc. Il est donc inutile de prévoir des éléments de fixations supplémentaires (comme des vis par exemple) pour assurer le maintien de la lame au fond de la rainure. La conception du lecteur de carte magnétique est donc simplifiée, et les coûts sont ainsi également limités.

Dans un mode de réalisation particulier de la technique proposée, au moins une desdites première et deuxième portions de fixation de la lame métallique de glissement prend la forme d'un double pliage d'une extrémité de ladite lame.

Ainsi, les portions de fixation de la lame métallique de glissement sont obtenues de manière simple et peu coûteuse, par simple pliage d'une lame métallique initialement sensiblement plane. La conception de la lame métallique de glissement prête au montage est donc simple et peu coûteuse.

Dans un mode de réalisation particulier de la technique proposée, ledit double pliage d'une extrémité de la lame métallique de glissement comprend un premier pliage de la lame d'un angle sensiblement égal à 45°, et un deuxième pliage de la lame d'un angle sensiblement égal à 45° dans une direction opposée à une direction dudit premier pliage.

De cette manière, la forme de la lame métallique de glissement permet non seulement une introduction facilitée des portions de fixation dans les logements de blocage correspondants de l'élément monobloc de lecture de carte magnétique, mais également un maintien efficace de la lame métallique de glissement dans ces logements de blocage une fois celle-ci montée.

Selon un autre aspect, la technique proposée se rapporte également à un procédé de montage d'une lame métallique de glissement au fond d'une rainure de déplacement de carte magnétique d'un élément monobloc de lecture de carte magnétique, selon la revendication 4.

De cette manière, le montage de la lame métallique de glissement dans une rainure pourtant étroite de l'élément monobloc de lecture de carte magnétique est une opération aisée, rapide, et peu coûteuse. En particulier, un seul outil est nécessaire pour la réalisation de cette opération, et la fixation de la lame métallique de glissement dans l'élément monobloc de lecture de carte est assurée par une simple coopération des portions de fixation de la lame métallique de glissement avec les logements de blocage complémentaires de l'élément monobloc. Ainsi, aucun moyen de fixation tiers autre que la lame elle-même ou l'élément monobloc lui-même n'est nécessaire au maintien de la lame métallique de glissement au fond de la rainure de déplacement de carte magnétique.

De cette manière, l'outil de montage tout comme la lame métallique de glissement restent de conception très simple et peu coûteuse, puisque l'outil peut être utilisé en conjonction avec la lame via une simple insertion d'un téton de l'outil dans un orifice de la lame.

Dans un mode de réalisation particulier de la technique proposée, le téton s'étend perpendiculairement à une première surface plane située à ladite extrémité de l'outil de montage, à la limite d'une zone de jonction de ladite première surface plane avec une deuxième surface plane également situé à ladite extrémité de l'outil de montage, lesdites première et deuxième surface plane formant entre-elles un angle compris entre 135° et 170°.

Ainsi, tout en restant simple et peu coûteuse, la conception de l'outil permet, de par l'orientation et la position du téton et de par l'angle formé entre les deux surfaces planes entre-elles, par simple inclinaison de l'outil de montage une fois le téton inséré dans l'orifice correspondant de la lame métallique de glissement, de pouvoir maintenir la lame avec l'outil. Elle permet également d'exercer très simplement un effet levier sur la lame afin de la déformer élastiquement en vue de l'introduction de la deuxième portion de fixation de la lame dans l'élément de blocage correspondant de l'élément monobloc de lecture de carte (la lame métallique de glissement étant par ailleurs déjà maintenue par son autre extrémité - sa première portion de fixation - dans le premier logement de blocage de l'élément monobloc de lecture de carte).

Dans un mode de réalisation particulier de la technique proposée, le téton est chanfreiné à son extrémité libre.

De cette manière, l'introduction du téton de l'outil de montage dans l'orifice de la lame métallique de glissement est facilitée.

Dans un mode de réalisation particulier de la technique proposée, le procédé de montage comprend, postérieurement au montage de la lame métallique de glissement au fond de la rainure de déplacement de carte magnétique, une étape de montage d'une tête de lecture de carte magnétique au sein de ladite rainure.

Ainsi, le montage de la tête de lecture au sein de la rainure de déplacement de carte magnétique de l'élément monobloc n'entrave pas l'opération de montage de la lame métallique de glissement, cette dernière ayant été réalisée avant.

### 4. Liste des figures

D'autres caractéristiques et avantages de la technique proposée apparaîtront plus clairement à la lecture de la description suivante d'un mode de réalisation préférentiel de la technique proposée, donné à titre de simple exemple illustratif et non limitatif, et des dessins annexés parmi lesquels :
- les figures 1a et 1b présentent respectivement une vue en perspective (figure 1a) et une vue de côté (figure 1b) d'un terminal de paiement électronique selon un mode de réalisation particulier de l'invention ;
- les figures 2a et 2b présentent une lame métallique de glissement vue de face (figure 2a) et de dessus (figure 2b), dans un mode de réalisation particulier de la technique proposée ;
- la figure 3b est une vue en coupe d'un élément monobloc de lecture d'une carte magnétique comprenant une rainure au fond de laquelle est positionnée une lame métallique de glissement, selon le plan de coupe matérialisé par l'axe A-A présenté en relation avec la figure 3a, dans un mode de réalisation particulier de la technique proposée ;
- la figure 4 décrit les principales étapes d'un procédé de montage d'une lame métallique de glissement au fond de la rainure d'un élément monobloc de lecture de carte magnétique, dans un mode de réalisation particulier de la technique proposée ;
- la figure 5 présente une vue en perspective d'un outil de montage d'une lame métallique de glissement au fond de la rainure d'un élément monobloc de lecture de carte magnétique, dans un mode de réalisation particulier de la technique proposée ;
- les figures 6a à 6c illustrent la mise en oeuvre de certaines étapes du procédé de montage décrit en figure 4, dans un mode de réalisation particulier de la technique proposée.

### 5. Description

Sur toutes les figures du présent document, les éléments et étapes identiques sont désignés par une même référence numérique.

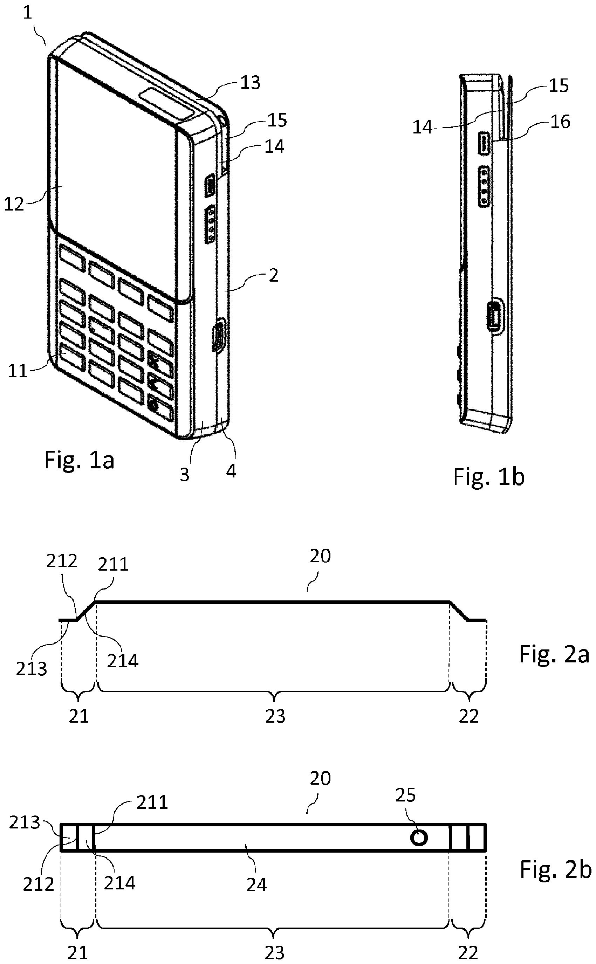

La **figure 1a** représente un terminal de paiement électronique 1, dans un mode de réalisation particulier de la technique proposée. Ce terminal 1 comprend notamment un clavier 11, un écran 12 et un lecteur de carte magnétique 13, permettant d'utiliser une carte à bande magnétique pour effectuer leurs paiements. Ces différents éléments, ainsi que des composants électroniques non visibles, sont regroupés dans un boitier 2 qui est lui-même composé d'une demi-coque supérieure 3 assemblée sur une demi-coque inférieure 4. Le corps du lecteur de carte magnétique 13 est formé par un élément monobloc 14 de lecture de carte magnétique, au sein duquel est aménagé une rainure 15 de déplacement d'une carte magnétique. Par élément « monobloc », on entend un élément formé d'une seule pièce, telle qu'une pièce plastique obtenue par exemple par un procédé de moulage par injection. La rainure 15 est mieux visible sur la **figure 1b** qui présente un terminal de paiement selon l'invention en vue de profil. Une partie 16 de l'élément monobloc 14 de lecture de carte magnétique forme notamment le fond de la rainure 15. Selon le principe général de la technique proposée, une lame métallique de glissement est montée au fond de la rainure 15 de déplacement d'une carte magnétique de l'élément monobloc 14. De cette manière, le lecteur de carte magnétique du terminal de paiement électronique offre une résistance accrue à l'usure provoquée par le glissement répété de cartes magnétiques dans la rainure de déplacement, dans la mesure où le fond plastique de cette rainure est en quelque sorte renforcé par le montage de la lame métallique de glissement. Contrairement aux solutions de l'art antérieur, cet ajout d'une lame métallique de glissement selon la technique proposée se fait sans préjudice des avantages liés à l'utilisation d'un élément monobloc en tant que corps du lecteur de carte magnétique : avec la technique proposée, l'utilisation d'un tel élément monobloc est préservée, et le terminal de paiement électronique présente non seulement une durée de vie accrue (en terme de nombre de glissement de cartes qu'il est possible d'effectuer avant que l'usure du lecteur de carte n'engendre des problèmes de lecture de cartes), mais il répond également aux exigences des utilisateurs (commerçants, banques) en termes de réduction des coûts de production, de compacité du boitier, et de sécurisation des transactions.

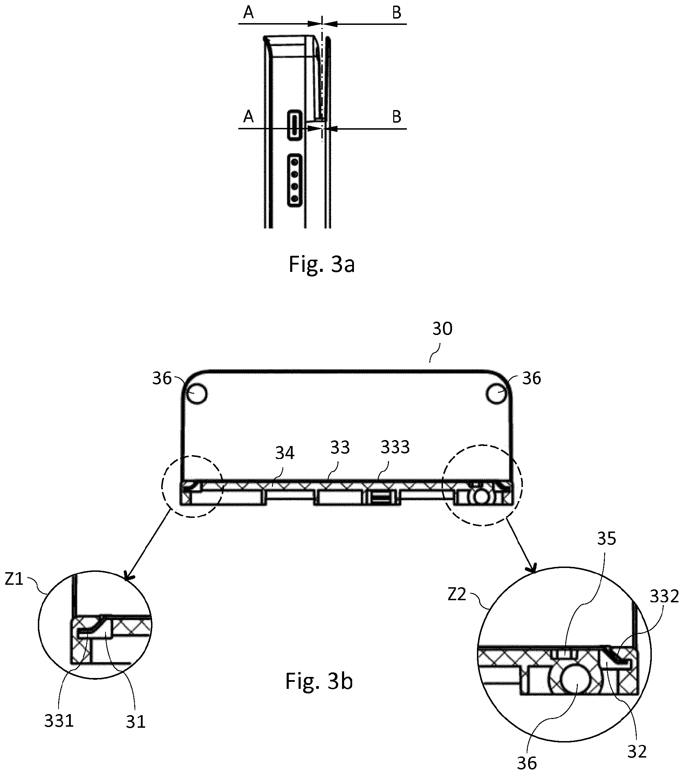

On présente, en relation avec les figures 2a et 2b, un exemple de lame métallique de glissement 20 apte à être montée au sein d'un élément monobloc de lecture de carte magnétique d'un terminal de paiement électronique, dans un mode de réalisation particulier de la technique proposée. La lame métallique de glissement 20 est représentée vue de face **(****figure 2a****)** et de dessus **(****figure 2b****).** Une telle lame métallique de glissement 20 comprend trois portions distinctes : une première portion de fixation 21 située à une extrémité de la lame, une deuxième portion de fixation 22 située à l'autre extrémité de la lame, et une portion centrale de glissement 23 - dont la face supérieure 24 est sensiblement plane - située entre lesdites première et deuxième portions de fixation (21, 22). Par face supérieure 24 de la portion centrale de glissement 23, on entend la face de cette portion qui est visible lorsque la lame métallique de glissement 20 est vue de dessus, comme représentée sur la figure 2b. Cette face supérieure 24 de la portion centrale de glissement 23 vise à servir de surface d'appui à la tranche d'une carte magnétique, lors du glissement d'une telle carte dans la rainure de déplacement de l'élément monobloc de lecture de carte magnétique, en vue de la lecture d'une bande magnétique de la carte magnétique. Les première et deuxième portions de fixation (21, 22) servent quant à elles au maintien de la lame métallique de glissement 20 au fond de la rainure de déplacement de carte magnétique, comme cela est décrit ci-après en relation avec les figures 3a et 3b. Selon une caractéristique particulière de la technique proposée, la lame métallique de glissement comprend également, dans sa portion centrale de glissement 23, un orifice 25 (par exemple un orifice circulaire). Cet orifice, dont l'utilité est détaillée infra, est préférentiellement situé au voisinage de l'une ou l'autre des première et deuxième portions de fixation (21, 22).

La **figure 3b** montre une vue en coupe d'un élément monobloc 30 de lecture d'une carte magnétique comprenant une rainure au fond de laquelle est positionnée une lame métallique de glissement 33, dans un mode de réalisation particulier de la technique proposée. Cette vue en coupe est réalisée selon le plan de coupe matérialisé par l'axe A-A présenté en relation avec la **figure 3a** (cette figure 3a correspond à une vue tronquée de la figure 1b, représentant la partie supérieure d'un terminal de paiement électronique vu de profil, dans un mode de réalisation particulier de la technique proposée). La coupe est donc réalisée dans l'axe de la rainure. Pour en faciliter la lecture, la figure 3b comprend également deux zones agrandies Z1 et Z2. Cette vue en coupe de l'élément monobloc permet de mettre en évidence deux logements de blocage (31, 32), qui prennent la forme de zones évidées aménagées dans la partie 34 de l'élément monobloc formant le fond de la rainure. Le premier logement de blocage 31 présente une forme complémentaire à la première portion de fixation 331 de la lame métallique de glissement 33, et le deuxième logement de blocage 32 présente une forme complémentaire à la deuxième portion de fixation 332 de la lame métallique de glissement 33. Les portions de fixation (331, 332) de la lame métallique de glissement 33 et les logements de blocage (31, 32) correspondants de l'élément monobloc 30 de lecture d'une carte magnétique sont conformés et dimensionnés pour coopérer et permettre le maintien de la lame métallique de glissement au fond de la rainure, une fois celle-ci montée. La portion centrale de glissement 333 de la lame métallique de glissement 33 repose alors, sur une majeure partie de sa longueur, sur la partie 34 de l'élément monobloc formant le fond de la rainure. Elle offre ainsi une surface d'appui très stable lors du glissement de la tranche d'une carte magnétique dont on souhaite opérer la lecture. Lorsque la lame est montée, les caractéristiques de la lame métallique de glissement et des logements de blocage sont tels que la face supérieure de la portion centrale de glissement 333 est affleurante ou légèrement surélevée vis-à-vis des portions de la partie 34 formant les parois supérieures des logements de blocage afin qu'il n'y ait aucune entrave au glissement de la carte magnétique. Le caractère métallique de la lame 33 favorise par ailleurs le glissement de la carte magnétique, tout en offrant une résistance accrue à l'usure, par rapport à une solution où le glissement serait opéré directement sur la partie plastique 34 de l'élément monobloc formant le fond de la rainure. Selon une caractéristique particulière de la technique proposée, un trou 35 peut également être aménagé dans la partie 34 formant le fond de la rainure. Ce trou 35, dont l'utilité est détaillée infra, est positionné de sorte qu'il tombe en regard de l'orifice aménagé dans la portion centrale de glissement 333 de la lame métallique de glissement 33, une fois cette dernière montée au fond de la rainure (on considère alors que la lame métallique de glissement 33 comprend effectivement un orifice tel que l'orifice 25 déjà décrit en relation avec la figure 2b).

Dans un autre mode de réalisation particulier (non représenté), la partie 34 de l'élément monobloc formant le fond de la rainure comprend un évidement au sein duquel la lame métallique est fixée. Dans ce cas, la portion centrale de glissement 333 de la lame métallique de glissement 33 ne repose pas nécessairement sur la partie 34 de l'élément monobloc, une fois montée : elle vient au contraire recouvrir l'évidemment au sein duquel elle est fixée : la lame métallique de glissement 33 est alors toujours maintenue par ses portions de fixations, dans des logements de blocage correspondants de la partie 34, aménagés de part et d'autre de l'évidement. Un tel évidemment peut par exemple servir d'emplacement à l'installation de composants complémentaires (par exemple des composants électroniques) associés au lecteur de carte magnétique, avant le montage de la lame métallique de glissement.

Dans un mode de réalisation particulier, l'élément monobloc 30 de lecture d'une carte magnétique comprend également des orifices 36 permettant le passage des vis et des outils de vissage permettant d'assembler le terminal de paiement électronique (ces orifices 36 sont par exemple utiles pour l'assemblage de l'élément monobloc 30 de lecture d'une carte magnétique avec la demi-coque inférieure du terminal de paiement électronique, ou pour l'assemblage des demi-coques inférieure et supérieure du terminal de paiement électronique).

On présente, de nouveau en relation avec les figures 2a et 2b, quelques caractéristiques notables de la lame métallique de glissement 20, dans des modes de réalisation particuliers de la technique proposée.

Selon une caractéristique particulière, au moins une desdites première et deuxième portions de fixation (21, 22) de la lame métallique de glissement 20 prend la forme d'un double pliage d'une extrémité de ladite lame. De cette manière, il est possible de former très simplement une portion de fixation, à partir d'une simple lame métallique initialement plane et se présentant sous la forme d'une plaque métallique sensiblement rectangulaire, de faible largeur et de faible épaisseur, par pliage de ses extrémités. Dans l'exemple des figures 2a et 2b, chaque extrémité de la lame a ainsi été pliée deux fois, de façon à former les portions de fixation 21 et 22. Par exemple, la première portion de fixation 21 résulte d'un premier pliage de la lame selon l'axe de pliage 211, et d'un deuxième pliage de la lame selon l'axe de pliage 212 (d'où le terme de double pliage utilisé dans la présente description). Les portions de fixation sont ainsi obtenues de manière particulièrement simple et peu coûteuse, et la lame métallique de glissement est elle-même de conception très simple, dans la mesure où elle se présente initialement sous une forme basique (un simple rectangle de métal fin). Selon une caractéristique particulière de la technique d'obtention d'une portion de fixation précédemment décrite, le double pliage mis en oeuvre comprend un premier pliage de la lame d'un angle sensiblement égal à 45°, et un deuxième pliage de la lame d'un angle sensiblement égal à 45° dans une direction opposée à une direction dudit premier pliage. L'extrémité libre 213 de la portion de fixation 21 ainsi formée est alors sensiblement parallèle à la portion centrale de glissement 23 de la lame, tout en étant reliée à celle-ci par une portion de jonction 214 d'inclinaison sensiblement égale à 45°. Cette structure particulière d'une portion de fixation présente un double avantage : celui d'une part de permettre une insertion facilitée dans un logement de blocage correspondant de l'élément monobloc de lecture de carte magnétique (de par l'inclinaison « moyenne » à 45° de la portion de jonction 214), et celui d'autre part d'assurer un maintien efficace de la lame une fois montée (de par le parallélisme entre l'extrémité libre 213 de la portion de fixation 21 et la portion centrale de glissement 23, qui fait que cette extrémité libre 213 offre une résistance importante au retrait de la lame métallique de glissement montée, lorsqu'elle vient en butée contre une paroi supérieure du logement de blocage l'accueillant).

On s'intéresse maintenant au procédé de montage d'une lame métallique de glissement au fond de la rainure de déplacement de carte magnétique d'un élément monobloc de lecture de carte magnétique. Comme déjà décrit précédemment en relation avec la figure 2, la lame métallique de glissement comprend une première portion de fixation située à une extrémité de la lame, une deuxième portion de fixation située à l'autre extrémité de la lame, et une portion centrale de glissement, sensiblement plane, située entre lesdites première et deuxième portions de fixation.

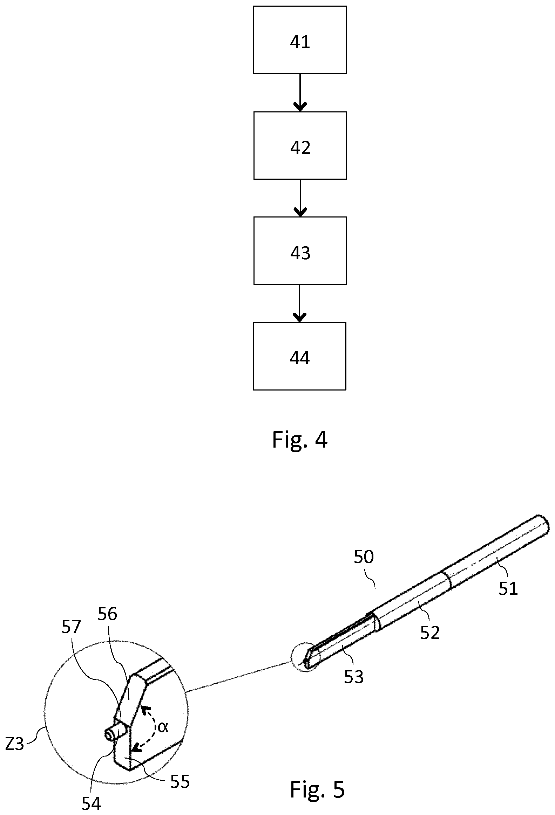

La **figure 4** illustre les principales étapes d'un tel procédé de montage, dans un mode de réalisation particulier. Dans une première étape 41, la première portion de fixation de la lame métallique de glissement est introduite dans un premier logement de blocage de l'élément monobloc de lecture de carte magnétique. La longueur de la lame métallique de glissement étant supérieure à la hauteur de la rainure, cette opération peut être réalisée sans outillage particulier : il suffit de tenir la lame métallique de glissement par une extrémité, et de guider la première portion de fixation présente à l'autre extrémité de la lame dans la rainure, jusqu'à l'introduire dans un premier logement de blocage complémentaire de l'élément monobloc de lecture de carte magnétique. La première portion de fixation et le premier logement de blocage sont conformés et dimensionnés de sorte que cette opération est facilitée si la lame métallique de glissement est présentée sous un certain angle (par exemple, l'angle formé entre la lame métallique de glissement et le fond de la rainure doit être compris entre 25° et 55°, pour que la première portion de fixation de la lame puisse être introduite complètement dans le premier logement de blocage de l'élément monobloc). On exerce ensuite, dans une étape 42, une pression sur la lame métallique de glissement, au moyen d'un outil de montage de la lame. Cette force de pression est exercée sur la lame métallique, dans un voisinage de la deuxième portion de fixation de la lame qui, contrairement à la première portion de fixation, n'est pas encore bloquée dans son logement de blocage (le deuxième logement de blocage). La force de pression est appliquée sensiblement en direction de la première portion de fixation, bloquée dans le premier logement de blocage, ce qui a pour effet de réduire la distance entre les première et deuxième portions de fixation de la lame, par déformation élastique de la lame métallique de glissement. Tout en maintenant cette force de pression sur la lame, l'outil de montage est alors utilisé dans une étape 43 pour guider et introduire la deuxième portion de fixation de la lame métallique de glissement déformée élastiquement dans un deuxième logement de blocage de l'élément monobloc de lecture de carte magnétique. L'outil de montage comprend à cette fin une partie suffisamment fine pour être insérée dans la rainure de l'élément monobloc de lecture de carte magnétique. Enfin, dans une étape 44, on relâche la force de pression qui était, jusque-là, toujours exercée. La lame tend alors à reprendre sa forme initiale ce qui conduit au blocage de la deuxième portion de fixation dans le deuxième logement de blocage. L'outil de montage peut éventuellement être utilisé pour appuyer sur la portion centrale de glissement de la lame, de manière à finaliser le montage en s'assurant que les portions de fixations sont bien poussées au fond de leurs logements de blocage respectifs. Les première et deuxième portions de fixation de la lame métallique de glissement sont alors respectivement bloquées dans les premier et deuxième logements de blocage de l'élément monobloc de lecture de carte magnétique, et la portion centrale de glissement de la lame repose sur le fond de la rainure : le montage de la lame métallique de glissement - maintenant bloquée au fond de la rainure - est alors terminé, et l'outil de montage peut être retiré.

Dans un mode de réalisation particulier, le procédé de montage selon la technique proposée comprend, postérieurement au montage de la lame métallique de glissement au fond de la rainure de déplacement de carte magnétique, une étape de montage d'une tête de lecture de carte magnétique au sein de la rainure. En procédant dans cet ordre, le montage d'un lecteur de carte magnétique est facilité, dans la mesure où la tête de lecture - montée après - ne peut donc pas occasionner une gêne (par exemple au passage de la lame, ou au passage de l'outil de montage) lors de l'installation de la lame métallique de glissement au fond de la rainure de l'élément monobloc formant le corps du lecteur.

On présente, en relation avec la **figure 5****,** un exemple d'outil de montage 50 pouvant être utilisé pour le montage d'une lame métallique de glissement au fond de la rainure de déplacement de carte magnétique, dans un mode de réalisation particulier. Cet outil de montage 50 comprend un manche 51, dont une partie 52 de la surface est éventuellement moletée pour en faciliter la préhension. Il comprend également une portion d'épaisseur rétrécie 53, qui s'étend dans le prolongement du manche 51. Cette portion d'épaisseur rétrécie 53 est suffisamment fine pour pouvoir être insérée dans la rainure d'un élément monobloc de lecture de carte magnétique (en d'autres termes, l'épaisseur de la portion d'épaisseur rétrécie 53 est inférieure à la distance séparant les deux parois de la rainure, elle est par exemple sensiblement égale à la largeur de la lame métallique de glissement qui doit être installée dans la rainure). La portion d'épaisseur rétrécie 53 est également suffisamment longue pour permettre, dans au moins une position d'utilisation de l'outil, d'atteindre confortablement l'un ou l'autre des logements de blocages de l'élément monobloc de lecture de carte magnétique, avec son extrémité libre (en d'autres termes, la longueur de la portion d'épaisseur rétrécie 53 est par exemple supérieure à la profondeur de la rainure). La zone Z3 de la figure 5 présente une vue agrandie de l'extrémité libre de la portion d'épaisseur rétrécie 53, qui correspond à l'extrémité utile de l'outil de montage 50. L'outil de montage 50 comprend, à cette extrémité utile, un téton 54 destiné à être inséré dans un orifice complémentaire de la lame métallique de glissement à monter (l'orifice 25 précédemment décrit en relation avec la figure 2b). Dans l'exemple de la figure 5, ce téton est cylindrique, et il est destiné à coopérer avec un orifice circulaire de diamètre légèrement supérieur à celui du téton.

Cet exemple est non limitatif : dans d'autres modes de réalisation particuliers de la technique proposée, téton et orifice complémentaire peuvent présenter d'autres formes. Par exemple, le téton peut présenter la forme d'un parallélépipède rectangle, destiné à être inséré dans un orifice de section rectangulaire de la lame métallique de glissement (téton et orifice peuvent alors être conformés et dimensionnés de sorte à limiter les positions d'insertion de l'outil dans l'orifice de la lame aux positions dans lesquelles la portion d'épaisseur rétrécie 53 sera correctement orientée pour pouvoir être insérée dans la rainure de l'élément monobloc lors du montage de la lame, par exemple).

Dans un mode de réalisation particulier de l'outil de montage, le téton 54 est chanfreiné à son extrémité libre, de sorte à faciliter son introduction dans l'orifice complémentaire de la lame métallique de glissement (un tel chanfrein est notamment visible dans la vue agrandie Z3 de la figure 5).

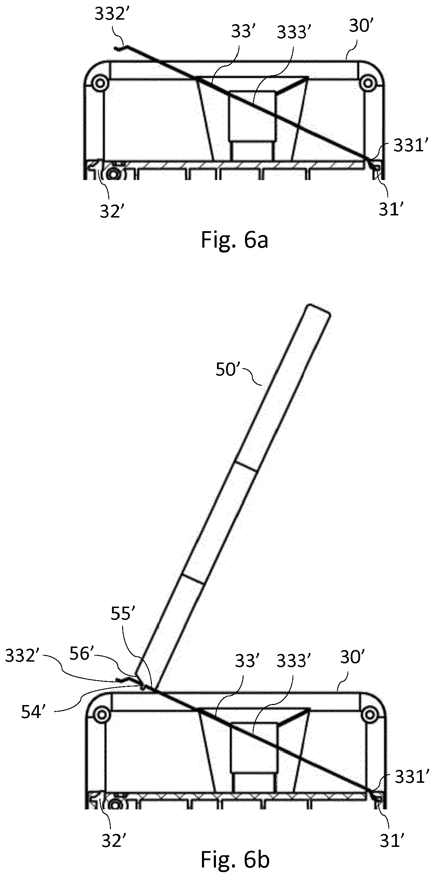

Selon une autre caractéristique particulière de l'outil de montage 50, le téton 54 s'étend perpendiculairement à une première surface plane 55 située à l'extrémité utile de l'outil de montage 50, à la limite d'une zone de jonction 57 de la première surface plane 55 avec une deuxième surface plane 56 également situé à ladite extrémité utile de l'outil de montage 50. Selon une caractéristique particulière de la technique proposée, ces première et deuxième surfaces planes (55, 56) forment entre-elles un angle α compris entre 135° et 170°. Cette conception ingénieuse de l'outil de montage 50 permet, de par l'orientation et la position du téton 54 et de par l'angle formé entre les deux surfaces planes (55, 56) entre-elles, par simple inclinaison de l'outil de montage 50 une fois le téton 54 inséré dans l'orifice complémentaire d'une lame métallique de glissement, d'une part de pouvoir maintenir la lame avec l'outil, et d'autre part de pouvoir exercer un effet levier sur la lame permettant de la déformer élastiquement. Ces caractéristiques apparaissent clairement sur les figures 6a à 6c, qui illustrent comment l'outil de montage présenté en relation avec la figure 5 peut être utilisé pour la mise en oeuvre de certaines des étapes du procédé de montage décrit en figure 4, afin de monter dans un élément monobloc de lecture de carte magnétique une lame métallique de glissement telle que présentée en relation avec les figures 2a et 2b, dans un mode de réalisation particulier.

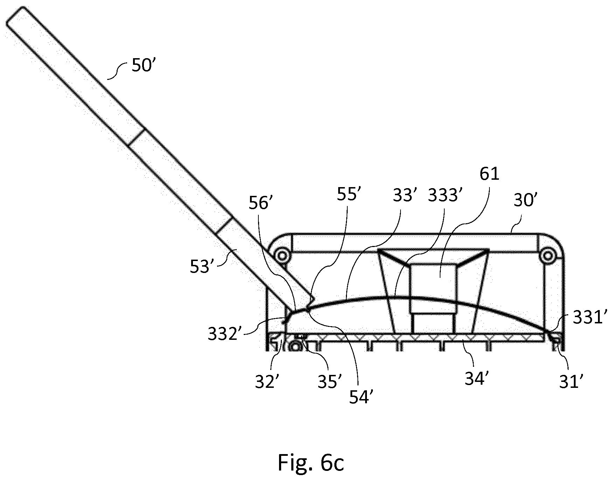

Les figures 6a à 6c présentent un élément monobloc 30' de lecture de carte magnétique vu en coupe selon le plan de coupe matérialisé par l'axe B-B indiqué sur la figure 3a. Une première portion de fixation 331' d'une lame métallique de glissement 33' est tout d'abord introduite dans un premier logement de blocage 31' de l'élément monobloc 30' (**figure 6a****,** correspondant à la mise en oeuvre de l'étape 41 du procédé de montage décrit en relation avec la figure 4). Cette opération peut être réalisée manuellement, sans outillage, en tenant par exemple la lame métallique de glissement 33' par l'extrémité 332', correspondant à une deuxième portion de fixation de la lame. Une fois la première portion de fixation 331' de la lame métallique de glissement 33' complètement engagée dans le premier logement de blocage 331' de l'élément monobloc 30' de lecture de carte magnétique, le téton 54' d'un outil de montage 50' est inséré dans un orifice correspondant de la lame métallique de glissement 33', jusqu'à ce que la première surface plane 55' de l'outil viennent au contact de la portion centrale de glissement 333' de la lame (**figure 6b**). Il suffit alors d'incliner l'outil 50' autour de la zone de jonction entre la première surface plane 55' et la deuxième surface plane 56', vers la deuxième surface plane 56', jusqu'à ce que l'outil 50' seul suffise à maintenir la lame métallique de glissement : l'axe du téton étant maintenant incliné par rapport à l'axe de l'orifice de la lame, cette dernière est en quelque sorte « coincée » dans l'outil de montage 50' (la longueur et le diamètre du téton, ainsi que le diamètre de l'orifice de la lame sont bien entendu dimensionnés pour qu'un tel maintien soit possible). On peut alors très simplement exercer une pression sur la lame métallique de glissement, au moyen de l'outil de montage, conformément à l'étape 42 du procédé de montage décrit en relation avec la figure 4, pour réduire la distance entre les premières et deuxième portions de fixation de la lame. Pour ce faire, il suffit d'incliner encore plus l'outil de montage 50' autour de la zone de jonction des première et deuxième surfaces planes (55', 56') de l'outil, tout en exerçant une poussée en direction de la première portion de fixation 331' de la lame déjà maintenue dans son logement de blocage 31'. L'effet levier alors obtenu par l'action conjointe de la deuxième surface plane 56' sur la surface supérieure de la portion centrale de glissement 333' de la lame d'une part, et du téton 54' sur la surface inférieure de la portion centrale de glissement 333' de la lame d'autre part, accompagné de plus par la poussée exercée en direction de la portion de fixation 331' de la lame déjà maintenue dans le premier logement de blocage 31', conduit à la déformation élastique de la lame (**figure 6c**). Cette opération est en outre facilitée par le fait que l'orifice d'insertion du téton 54' est situé au voisinage d'une portion de fixation de la lame métallique de glissement, c'est à dire proche d'une extrémité de la lame : la pression à exercer pour la déformer est donc moindre. On utilise ensuite l'outil de montage 50' pour guider la deuxième portion de fixation 332' de la lame métallique de glissement déformée élastiquement jusqu'à son introduction dans le deuxième logement de blocage 32' de l'élément monobloc 30' (étape 43 du procédé de montage, décrit en relation avec la figure 4). La portion d'épaisseur rétrécie 53 de l'outil rend possible cette opération, car elle est suffisamment fine pour pouvoir être insérée dans la rainure de l'élément monobloc 30' de lecture carte magnétique. La pression exercée sur la lame métallique de glissement 33' peut enfin être relâchée (étape 44 du procédé de montage, décrit en relation avec la figure 4), notamment en redressant l'outil de montage 50', c'est à dire en l'inclinant autour de la zone de jonction entre la première surface plane 55' et la deuxième surface plane 56', mais vers la première surface plane 55' cette fois-ci.

On constate alors l'utilité du trou 35' aménagé, selon une caractéristique particulière de la technique proposée, dans la partie 34' de l'élément monobloc formant le fond de la rainure. Ce trou 35' permet en effet d'accueillir le téton 54' de l'outil de montage en fin de montage de la lame métallique de glissement au fond de la rainure de l'élément monobloc, pendant ou après l'introduction de la deuxième portion de fixation de la lame dans le deuxième logement de blocage de l'élément monobloc (autrement dit, lors des étapes 43 ou 44 du procédé de montage décrit en relation avec la figure 4). Le trou 35' est suffisamment large et profond pour accueillir le téton 54' sous différentes inclinaisons. Ainsi le téton 54' ne vient jamais buter sur la partie 34' formant le fond de la rainure pendant ces opérations de fin de montage, et il n'entrave pas leur bon déroulement. De plus, une fois le téton 54' positionné dans le trou 35', les première et deuxième surfaces planes (55', 56') de l'outil de montage peuvent servir de surface utile pour exercer un appui sur la lame métallique de glissement de glissement et ainsi finaliser son bon positionnement (en assurant notamment l'introduction complète de la deuxième portion de fixation 332' de la lame métallique de glissement 33' dans le deuxième logement de blocage 32' de l'élément monobloc 30'). Une fois la lame métallique de glissement 33' correctement installée au fond de la rainure de l'élément monobloc 30', la tête de lecture du lecteur de carte magnétique peut être montée sur un emplacement dédié de l'élément monobloc (emplacement 61 de la figure 6c).

Dans l'ensemble de la présente description de la technique proposée et dans les figures associées, les première et deuxième portions de fixation d'une lame métallique de glissement sont représentées comme ayant des formes sensiblement similaires. C'est également le cas des premier et deuxième logements de blocages correspondants d'un élément monobloc de lecture de carte magnétique. Bien que de telles caractéristiques de la lame métallique de glissement et de l'élément monobloc soient avantageuses pour des raisons de simplicité de conception, et donc de coûts réduits, il est bien entendu que la technique proposée ne se limite pas à une telle mise en oeuvre. Ainsi, les première et deuxième portions de fixation d'une lame métallique de glissement peuvent tout aussi bien présenter des formes très différentes, sans sortir du cadre de la présente invention (et il en va de même pour les premier et deuxième logements de blocage de l'élément monobloc de lecture d'une carte magnétique). De même, l'outil de montage décrit en relation avec la figure 5 est un exemple donné à titre purement illustratif, mais non limitatif de la technique proposée. D'autres formes d'outil de montage peuvent ainsi être envisagées sans sortir du cadre de la présente invention. En particulier, l'extrémité utile de l'outil de montage peut être conformée et dimensionnée de manière à permettre la mise en oeuvre d'autres moyens qu'une coopération entre un téton de l'outil et un orifice de la lame métallique de glissement pour exercer la pression nécessaire à la déformation élastique de la lame, en vue de son montage. Par exemple, lorsqu'au moins une portion de fixation de la lame métallique de glissement prend la forme d'un double pliage d'une extrémité de la lame, la déformation élastique de la lame peut être obtenue en exerçant une pression au niveau de l'angle formé entre l'extrémité libre et la portion de jonction de cette portion de fixation (l'autre portion de fixation étant par ailleurs déjà maintenue dans son logement de blocage). Cet angle (qui correspond par exemple à l'axe de pliage référencé 212 dans l'exemple des figures 2a et 2b) s'avère en effet être un point d'application intéressant pour exercer une pression en vue de la déformation élastique de la lame métallique de glissement : il est situé au voisinage de l'extrémité de la lame (donc la pression à exercer est moindre), et il permet un appui sans glissement (ou du moins avec des risques de glissement limités) pour l'outil de montage adapté à une telle mise en oeuvre. Dans ce cas, il n'est alors plus nécessaire de prévoir un orifice dans la lame métallique de glissement.

## Revendications

1. Terminal de paiement électronique (1) comprenant une demi-coque supérieure (3) et une demi-coque inférieure (4), ladite demi-coque inférieure (4) comprenant un élément monobloc (14) de lecture de carte magnétique, ledit élément monobloc comprenant une rainure (15) de déplacement d'une carte magnétique de sorte à permettre la lecture d'une bande magnétique de la carte magnétique, ledit terminal étant **caractérisé en ce que** l'élément monobloc (14) de lecture de carte magnétique comprend une lame métallique de glissement (20) positionnée au fond de ladite rainure (15) de déplacement de la carte magnétique, ladite lame métallique de glissement comprenant une première portion de fixation (21) située à une extrémité de la lame, une deuxième portion de fixation (22) située à l'autre extrémité de la lame, et une portion centrale de glissement (23), sensiblement plane, située entre lesdites première et deuxième portions de fixation, ladite portion centrale comprenant un orifice (25) situé au voisinage de l'une ou l'autre desdites première et deuxième portions de fixation, ledit orifice étant adapté pour recevoir un téton situé à une extrémité d'un outil pour le montage de ladite lame au fond de ladite rainure, ledit fond comprenant un trou (35) positionné de sorte qu'il tombe en regard dudit orifice lorsque ladite lame métallique de glissement est montée au fond de ladite rainure, ledit trou étant suffisamment large et profond pour accueillir ledit téton sous différentes inclinaisons, ledit élément monobloc de lecture de carte magnétique comprenant en outre, au fond de ladite rainure, un premier logement de blocage (31) présentant une forme complémentaire à ladite première portion de fixation de la lame métallique de glissement et un deuxième logement de blocage (32) présentant une forme complémentaire à ladite deuxième portion de fixation de la lame métallique de glissement.

2. Terminal de paiement électronique selon la revendication 1, **caractérisé en ce que** au moins une desdites première et deuxième portions de fixation de la lame métallique de glissement prend la forme d'un double pliage d'une extrémité de ladite lame.

3. Terminal de paiement électronique selon la revendication 2, **caractérisé en ce que** ledit double pliage d'une extrémité de la lame métallique de glissement comprend un premier pliage de la lame d'un angle sensiblement égal à 45°, et un deuxième pliage de la lame d'un angle sensiblement égal à 45° dans une direction opposée à une direction dudit premier pliage.

4. Procédé de montage d'une lame métallique de glissement au fond d'une rainure de déplacement de carte magnétique d'un élément monobloc de lecture de carte magnétique, ladite lame métallique de glissement comprenant une première portion de fixation située à une extrémité de la lame, une deuxième portion de fixation située à l'autre extrémité de la lame, et une portion centrale de glissement, sensiblement plane, située entre lesdites première et deuxième portions de fixation, ladite portion centrale comprenant un orifice situé au voisinage de l'une ou l'autre desdites première et deuxième portions de fixation, ledit fond comprenant un trou positionné de sorte qu'il tombe en regard dudit orifice lorsque ladite lame métallique de glissement est montée au fond de ladite rainure, ledit trou étant suffisamment large et profond pour accueillir ledit téton sous différentes inclinaisons, ledit procédé étant **caractérisé en ce qu'**il comprend :
- une étape d'introduction de ladite première portion de fixation de la lame métallique de glissement dans un premier logement de blocage dudit élément monobloc de lecture de carte magnétique ;
- une étape d'exercice d'une pression sur ladite lame, au moyen d'un outil de montage de la lame comprenant à une extrémité un téton inséré dans ledit orifice pour ledit montage, de sorte de réduire la distance entre lesdites premières et deuxième portions de fixation, par déformation élastique de la lame ;
- une étape d'introduction de ladite deuxième portion de fixation de la lame métallique de glissement déformée élastiquement dans un deuxième logement de blocage dudit élément monobloc de lecture de carte magnétique, au moyen dudit outil de montage ;
- une étape de relâchement de ladite pression exercée, comprenant l'accueil du téton dudit outil de montage dans ledit trou, conduisant au blocage de ladite deuxième portion de fixation dans ledit deuxième logement de blocage.

5. Procédé de montage selon la revendication 4, **caractérisé en ce que** ledit téton s'étend perpendiculairement à une première surface plane située à ladite extrémité de l'outil de montage, à la limite d'une zone de jonction de ladite première surface plane avec une deuxième surface plane également situé à ladite extrémité de l'outil de montage, lesdites première et deuxième surface plane formant entre-elles un angle compris entre 135° et 170°.

6. Procédé de montage selon la revendication 4, **caractérisé en ce que** ledit téton est chanfreiné à son extrémité libre.

7. Procédé de montage selon la revendication 4, **caractérisé en ce qu'**il comprend, postérieurement au montage de la lame métallique de glissement au fond de la rainure de déplacement de carte magnétique, une étape de montage d'une tête de lecture de carte magnétique au sein de ladite rainure.

## Patentansprüche

1. Elektronisches Zahlungsendgerät (1), umfassend eine obere Halbschale (3) und eine untere Halbschale (4), wobei die untere Halbschale (4) ein einteiliges Magnetkartenleseelement (14) umfasst, wobei das einteilige Element eine Schiene (15) zum Verschieben einer Magnetkarte umfasst, um das Lesen eines Magnetstreifens der Magnetkarte zu ermöglichen, wobei das Endgerät **dadurch gekennzeichnet ist, dass** das einteilige Magnetkartenleseelement (14) einen Metallschieber (20) umfasst, der am Boden der Schiene (15) zum Verschieben der Magnetkarte angeordnet ist, wobei der Metallschieber einen ersten Befestigungsabschnitt (21), der sich an einem Ende des Schiebers befindet, einen zweiten Befestigungsabschnitt (22), der sich am anderen Ende des Schiebers befindet, und einen im Wesentlichen ebenen mittleren Gleitabschnitt (23), der sich zwischen den ersten und zweiten Befestigungsabschnitten befindet, umfasst, wobei der Mittelabschnitt eine Öffnung (25) umfasst, die sich in der Nähe des einen oder des anderen der ersten und zweiten Befestigungsabschnitte befindet, wobei die Öffnung geeignet ist, einen Zapfen aufzunehmen, der sich an einem Ende eines Werkzeugs für die Montage des Schiebers am Boden der Schiene befindet, wobei der Boden ein Loch (35) umfasst, das derart positioniert ist, dass es gegenüber die Öffnung gelangt, wenn der Metallschieber am Boden der Schiene montiert wird, wobei das Loch groß und tief genug ist, um den Zapfen in verschiedenen Neigungen aufzunehmen, wobei das einteilige Magnetkartenleseelement ferner am Boden der Schiene eine erste Feststellaufnahme (31), die eine komplementäre Form zum ersten Befestigungsabschnitt des Metallschiebers aufweist, und eine zweite Feststellaufnahme (32), die eine komplementäre Form zum zweiten Befestigungsabschnitt des Metallschiebers aufweist, umfasst.

2. Elektronisches Zahlungsendgerät nach Anspruch 1, **dadurch gekennzeichnet, dass** mindestens einer der ersten und zweiten Befestigungsabschnitte des Metallschiebers die Form eines Doppelfalzes eines Endes des Schiebers annimmt.

3. Elektronisches Zahlungsendgerät nach Anspruch 2, **dadurch gekennzeichnet, dass** der Doppelfalz eines Endes des Metallschiebers einen ersten Falz des Schiebers mit einem Winkel im Wesentlichen gleich 45° und einen zweiten Falz des Schiebers mit einem Winkel im Wesentlichen gleich 45° in einer zur Richtung des ersten Falzes entgegengesetzten Richtung umfasst.

4. Verfahren zur Montage eines Metallschiebers am Boden einer Schiene zum Verschieben einer Magnetkarte eines einteiligen Magnetkartenleseelements, wobei der Metallschieber einen ersten Befestigungsabschnitt, der sich an einem Ende des Schiebers befindet, einen zweiten Befestigungsabschnitt, der sich am anderen Ende des Schiebers befindet, und einen im Wesentlichen ebenen mittleren Gleitabschnitt, der sich zwischen den ersten und zweiten Befestigungsabschnitten befindet, umfasst, wobei der Mittelabschnitt eine Öffnung umfasst, die sich in der Nähe des einen oder des anderen der ersten und zweiten Befestigungsabschnitte befindet, wobei der Boden ein Loch umfasst, das derart positioniert ist, dass es gegenüber die Öffnung gelangt, wenn der Metallschieber am Boden der Schiene montiert wird, wobei das Loch groß und tief genug ist, um den Zapfen in verschiedenen Neigungen aufzunehmen, wobei das Verfahren **dadurch gekennzeichnet ist, dass** es umfasst:
- einen Schritt des Einführens des ersten Befestigungsabschnitts des Metallschiebers in eine erste Feststellaufnahme des einteiligen Magnetkartenleseelements;
- einen Schritt des Ausübens eines Drucks auf den Schieber mit Hilfe eines Montagewerkzeugs des Schiebers, umfassend an einem Ende einen Zapfen, der in die Öffnung für die Montage eingesetzt wird, um den Abstand zwischen den ersten und zweiten Befestigungsabschnitten durch elastische Verformung des Schiebers zu verringern;
- einen Schritt des Einführens des zweiten Befestigungsabschnitts des elastisch verformten Metallschiebers in eine zweite Feststellaufnahme des einteiligen Magnetkartenleseelements mit Hilfe des Montagewerkzeugs;
- einen Schritt des Lockerns des ausgeübten Drucks, umfassend die Aufnahme des Zapfens des Montagewerkzeugs in dem Loch, was zum Feststellen des zweiten Befestigungsabschnitts in der zweiten Feststellaufnahme führt.

5. Montageverfahren nach Anspruch 4, **dadurch gekennzeichnet, dass** sich der Zapfen senkrecht auf eine erste ebene Fläche erstreckt, die sich am Ende des Montagewerkzeugs an der Grenze einer Verbindungszone der ersten ebenen Fläche mit einer zweiten ebenen Fläche, die auch am Ende des Montagewerkzeugs angeordnet ist, befindet, wobei die erste und zweite ebene Fläche zwischen sich einen Winkel zwischen 135° und 170° bilden.

6. Montageverfahren nach Anspruch 4, **dadurch gekennzeichnet, dass** der Zapfen an seinem freien Ende abgeschrägt ist.

7. Montageverfahren nach Anspruch 4, **dadurch gekennzeichnet, dass** es nach der Montage des Metallschiebers am Boden der Schiene zum Verschieben einer Magnetkarte einen Schritt der Montage eines Magnetkartenlesekopfes innerhalb der Schiene umfasst.

## Claims

1. Electronic payment terminal (1) comprising an upper half-shell (3) and a lower half-shell (4), said lower half-shell (4) comprising a magnetic-card-reading single-piece element (14), said single-piece element comprising a groove (15) for movement of a magnetic card so as to enable the reading of a magnetic stripe of the magnetic card, said terminal being **characterized in that** the magnetic-card-reading single-piece element (14) comprises a metal sliding blade (20) positioned at the bottom of said groove (15) for movement of the magnetic card, said metal sliding blade comprising a first affixing portion (21) situated at one extremity of the blade, a second affixing portion (22) situated at the other extremity of the blade and a substantially plane, central sliding portion (23) situated between said first and second affixing portions, said central portion comprising an orifice (25) situated in the vicinity of either of said first and second affixing portions, said orifice being adapted to receive a point located at an extremity of a tool for mounting said blade at the bottom of said groove, said bottom comprising a hole (35) positioned so as to get placed before said orifice when said metal sliding blade is mounted at the bottom of said groove, said hole being wide enough and deep enough to receive said point at different inclinations, said magnetic-card-reading single-piece element further comprising, at the bottom of said groove, a first blocking cavity (31) having a shape complementary to that of said first affixing portion of the metal sliding blade and a second blocking cavity (32) having a shape complementary to that of said second affixing portion of the metal sliding blade.

2. Electronic payment terminal according to claim 1, **characterized in that** at least one of said first and second affixing portions of the metal sliding blade takes the form of a double folding of one extremity of said blade.

3. Electronic payment terminal according to claim 2, **characterized in that** said double folding of one extremity of the metal sliding blade comprises a first folding of the blade by an angle substantially equal to 45°, and a second folding of the blade by an angle substantially equal to 45° in a direction opposite that of the direction of said first folding.

4. Method for mounting a metal sliding blade at the bottom of a magnetic-card movement groove of a magnetic-card reading single-piece element, said metal sliding blade comprising a first affixing portion situated at one extremity of the blade, a second affixing portion situated at the other extremity of the blade and a substantially plane, central sliding portion situated between said first and second affixing portions, said central portion comprising an orifice situated in the vicinity of either of said first and second affixing portions, said bottom comprising a hole positioned so as to get placed before said orifice when said metal sliding blade is mounted at the bottom of said groove, said hole being wide enough and deep enough to receive said point at different inclinations, said method being **characterized in that** it comprises
- a step for introducing said first affixing portion of the metal sliding blade into a first blocking cavity of said magnetic-card reading single-piece element;
- a step for exerting pressure on said blade by means of a tool for mounting the blade comprising a point at one of its extremities, inserted into said orifice for said mounting, so as to reduce the distance between said first and second affixing portions by elastic deformation of the blade;
- a step for introducing said second affixing portion of the elastically deformed metal sliding blade into a second blocking cavity of said magnetic-card reading single-piece element by means of said mounting tool;
- a step for relaxing said exerted pressure, comprising the reception of the point of said tool for mounting in said hole, leading to the blocking of said second affixing portion in said second blocking cavity.

5. Method of mounting according to claim 4, **characterized in that** said point extends perpendicularly to a first plane surface situated at said extremity of the mounting tool, at the boundary of a junction zone between said first plane surface and a second plane surface also situated at said extremity of the mounting tool, said first and second plane surfaces forming an angle between them of 135° to 170°.

6. Method of mounting according to claim 4, **characterized in that** said point is chamfered at its free extremity.

7. Method of mounting according to claim 4, **characterized in that** it comprises, subsequently to the mounting of the metal sliding blade into the bottom of the magnetic card movement groove, a step for mounting a magnetic-card reading head within said groove.
